# EUROPEAN PATENT SPECIFICATION

(11) **EP 3 067 822 B1**
(45) Date of publication and mention of the grant of the patent: **17.10.2018**
(21) Application number: 16152722.1
(22) Date of filing: 26.01.2016
(51) Int. Cl.: G06K 7/00, H01R 13/24

(54) **SMART CARD HOLDER AND ELECTRONIC DEVICE**
CHIPKARTENHALTER UND ELEKTRONISCHE VORRICHTUNG
SUPPORT DE CARTE À PUCE ET DISPOSITIF ÉLECTRONIQUE

(30) Priority: 13.03.2015 CN 201510109909
(43) Date of publication of application: 14.09.2016
(73) Proprietor: Xiaomi Inc., Beijing 100085 (CN)
(72) Inventor: YU, Licheng, Beijing 100085 (CN); WU, Fenghui, Beijing 100085 (CN); XU, Duo, Beijing 100085 (CN); YAN, Kesheng, Beijing 100085 (CN)
(74) Representative: Cougard, Jean-Marie

(56) References cited:
- CN-U- 204 179 267
- CN-U- 204 190 022
- DE-A1- 10 064 137
- JP-A- 2009 129 890
- JP-B2- 4 733 610
- US-A1- 2015 004 850

## Description

### TECHNICAL FIELD

The present disclosure relates to the technical field of mechanism and, more particularly, to a smart card holder and an electronic device.

### BACKGROUND

The smart card holder is a necessary component for an electronic device such as cellphone, the form of which is diversified as the development of electronic industry.

Generally, the smart card holder is usually provided with a holder terminal which is secured onto a holder body. The holder terminal typically includes a terminal fixing portion and a terminal cantilever. A tail of the terminal cantilever is connected to the terminal fixing portion and a head of the terminal cantilever is in a free state, such that metal chip of the smart card is electrically connected to the terminal cantilever after the smart card is inserted into the card holder, and the terminal cantilever will rebound after the smart card is extracted.

Document US 2015/004850 A1 discloses a card connector having a housing and a contact. The contact is supported by the housing and includes a contact arm and an extended portion. The contact arm includes a free end and the extended portion includes a first end positioned below the contact arm on which the free end of the contact arm may slide. Documents CN 204 179 267 U and CN 204 190 022 U disclose similar arrangements.

### SUMMARY

The invention is defined in the appended set of claims.

In order to solve problems in the related art, the present disclosure provides a smart card holder and an electronic device. The technical solutions are hereby given as follows.

According to a first aspect of the invention, there is provided a smart card holder including a holder body and at least one holder terminal arranged to be in electrical contact with a metal chip of a smart card.

Each holder terminal includes a terminal fixing portion and a strip-shaped terminal cantilever, a tail of the terminal cantilever being fixedly connected to a first fixing end of the terminal fixing portion, a head of the terminal cantilever being contiguously placed on a second fixing end of the terminal cantilever, and a middle portion of the terminal cantilever being higher than the tail of the terminal cantilever and the head of the terminal cantilever.

According to the invention, the terminal fixing portion is a framed metal structure with a middle cutout, the second fixing end is provided with two bent portions projecting towards the cutout with each other, and each bent portion gradually declines from the tail to the head of the terminal cantilever.

In a particular embodiment, the terminal cantilever is located above the cutout of the terminal fixing portion.

In a particular embodiment, the head of the terminal cantilever is provided with two supporting portions oppositely projecting towards two sides.

In a particular embodiment, the holder body is provided with a metal plate below the head of the terminal cantilever.

In a particular embodiment, the supporting portions are contiguously located on the bent portions respectively, when no smart card is inserted into the smart card holder;
the supporting portions are disengaged from the bent portions and are arranged to slide forwards to contact the metal plate when the smart card is inserted into the smart card holder.

In a particular embodiment, an area of the metal plate is larger than a sliding area of the head of the terminal cantilever when sliding.

According to a second aspect of the invention, there is provided an electronic device including the smart card holder according to the first aspect the invention.

The technical solutions provided by embodiments of the present disclosure may comprise the following advantageous effects.

The head of the terminal cantilever is in contact with the second fixing end of the terminal fixing portion by fixedly connecting the tail of the terminal cantilever to the first fixing end of the terminal fixing portion; as the head of the terminal cantilever is stable on the terminal fixing portion, the present disclosure solves a problem that: the head of the terminal cantilever in the free state fails to rebound because of excessive pressure after extracting the smart card, such that the circuits between the smart card holder and the smart card are not conducted when re-inserting the smart card; thus improves the connection stability between the smart card holder and the smart card.

It is to be appreciated that both the foregoing general description and the following detailed description are exemplary and explanatory only and are not restrictive of the invention.

### BRIEF DESCRIPTION OF THE DRAWINGS

The accompanying drawings, which are incorporated in and constitute a part of this specification, illustrate embodiments consistent with the invention and, together with the description, serve to explain the principles of the invention.
Fig. 1 is a structural schematic diagram of a holder terminal according to an exemplary embodiment.
Fig. 2A is a structural schematic diagram of a smart card holder according to an exemplary embodiment.
Fig. 2B is a structural schematic diagram of a holder terminal in a smart card holder according to an exemplary embodiment.
Fig. 2C is a structural schematic diagram of a head of the holder terminal according to an exemplary embodiment.
Fig. 2D is a structural schematic diagram of a holder terminal before and after a smart card is inserted into the smart card holder according to an exemplary embodiment.

### DETAILED DESCRIPTION

Reference will now be made in detail to exemplary embodiments, examples of which are illustrated in the accompanying drawings. The following description refers to the accompanying drawings in which the same numbers in different drawings represent the same or similar elements unless otherwise represented. The implementations set forth in the following description of exemplary embodiments do not represent all implementations consistent with the invention. Instead, they are merely examples of devices and methods consistent with some aspects related to the invention as recited in the appended claims.

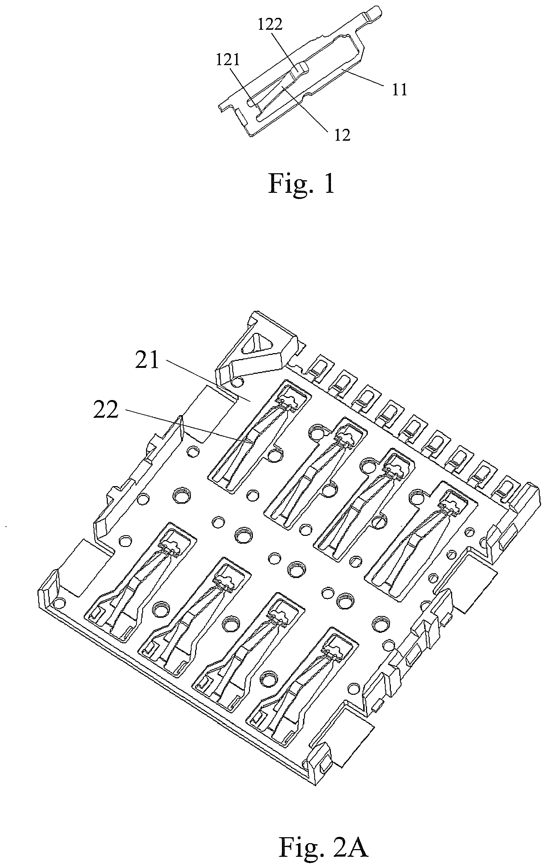

Fig. 1 is a structural schematic diagram of a holder terminal according to an exemplary embodiment. As shown in Fig. 1, a holder terminal comprises a terminal fixing portion 11 and a terminal cantilever 12 with its tail 121 connected to the terminal fixing portion 11 and its head 122 in a free state. The head 122 of the terminal cantilever 12 is mainly used to be in electrical contact with the metal chip of the smart card. The terminal cantilever 12 is pressed by the smart card when the smart card is inserted into the smart card holder, such that the head 122 of the terminal cantilever 12 is in electrical contact with the metal chip of the smart card and displaces downwards under pressure, and such that a connection between the tail 121 of the terminal cantilever 12 and the terminal holder 11 is also deformed under pressure. The pressure applied to the terminal cantilever 12 by the smart card is removed when the smart card is extracted from the smart card holder. Therefore, in a normal condition, the head 122 of the terminal cantilever 12 may rebound to its original position, and the connection between the tail 121 of the terminal cantilever 12 and the terminal holder 11 also returns to its original shape.

In practice, since the allowable pressure for the connection between the tail 121 of the terminal cantilever 12 and the terminal holder 11 is limited, the connection between the tail 121 of the terminal cantilever 12 and the terminal holder 11 may not return to its original shape after deformation when the terminal cantilever 12 is under a long-term pressure from the smart card or under a pressure beyond a maximum allowable pressure, such that the head 122 of the terminal cantilever 12 may not rebound to its original position. At that point, when the smart card is inserted into the smart card holder, the electrical contact between the head 122 of the terminal cantilever 12 and metal chip of the smart card may fail since the head 122 of the terminal cantilever 12 fails to rebound to its original position, such that the smart card is not readable by the electronic device contained the smart card holder.

Therefore, in order to prevent the above situation, an improved smart card holder according to the invention is presented. With reference to Fig. 2A, it is a structural schematic diagram of a smart card holder according to an exemplary embodiment. As seen in Fig. 2A, the smart card holder comprises a holder body 21 and at least one holder terminal 22 arranged to be in electrical contact with a metal chip of the smart card when said smart card is inserted into (or received by) the smart card holder.

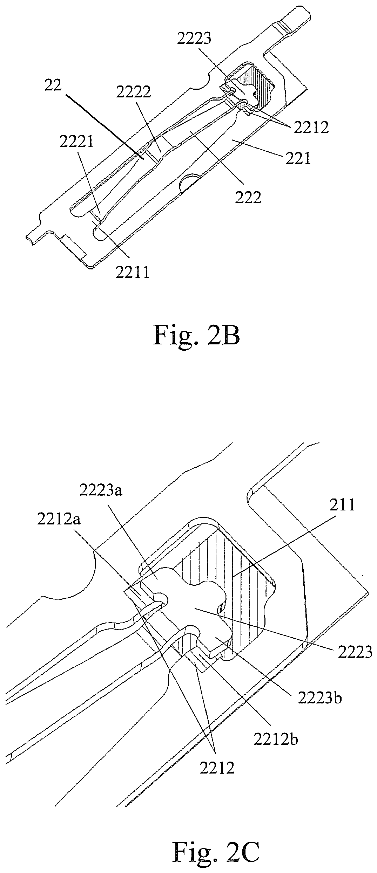

With respect to each holder terminal 22, with reference to Fig. 2B, it is a structural schematic diagram of a holder terminal in a smart card holder according to an exemplary embodiment. As seen in Fig. 2B, each holder terminal 22 includes a terminal fixing portion 221 and a strip-shaped terminal cantilever 222. A tail 2221 of the terminal cantilever 222 is fixedly connected to a first fixing end 2211 of the terminal fixing portion 221, a head 2223 of the terminal cantilever 222 is contiguously placed on a second fixing end 2212 of the terminal fixing portion 221, and a middle portion 2222 of the terminal cantilever 222 is higher than the tail 2221 of the terminal cantilever 222 and the head 2223 of the terminal cantilever 222.

The middle portion 2222 of the terminal cantilever 222 is mainly used to be in electrical contact with a metal chip of the smart card, therefore the middle portion 2222 of the terminal cantilever 222 is higher than the tail 2221 of the terminal cantilever 222 and the head 2223 of the terminal cantilever 222. In other words, the middle portion 2222 of the terminal cantilever 222 forms a raised structure, which may be formed by bending the terminal cantilever 222 or formed directly with a mould. In this embodiment, the forming method of the middle portion 2222 of the terminal cantilever 222 is not limited to this.

According to the invention, the terminal fixing portion 221 is a framed metal structure with a middle cutout, and the terminal cantilever 222 is located above the cutout of the terminal fixing portion 221.

The terminal fixing portion 221 is a framed metal structure with a middle cutout. Moreover, the first fixing end 2211 is arranged at an opposite side within the framed metal structure with respect to the tail 2221 of the terminal cantilever 222 and the second fixing end 2212 is arranged at an opposite side within the framed metal structure with respect to the head 2223 of the terminal cantilever 222.

The terminal cantilever 222 is located above the cutout of the terminal fixing portion 221, which gives an extending space for the terminal cantilever 222. Generally, the terminal cantilever 222, which is displaced downwards due to pressure when inserting the smart card, may be received in the cutout.

According to the invention, the second fixing end 2212 is provided with two bent portions projecting towards the cutout with each other, each of which declines gradually from the tail 2221 to the head 2223 of the terminal cantilever 222.

With reference to Fig. 2C, it is a structural schematic diagram of the head of a holder terminal according to an exemplary embodiment. As seen in Fig. 2C, the second fixing end 2212 is provided with bent portions 2212a and 2212b projecting towards the cutout with each other, both of which decline gradually from the tail 2221 to the head 2223 of the terminal cantilever 222.

It should be noted that the bending portions in this particular embodiment may facilitate the abutment with the head 2223 of the terminal cantilever 222 before inserting the smart card into the smart card holder, thereby allowing better support of the terminal cantilever 222, and the terminal cantilever 222 may also keep a stable state before inserting the smart card into the smart card holder. At the same time, the bent portions according to this particular embodiment may also make the head 2223 of the terminal cantilever 222 sliding forwards more smoothly when inserting the smart card into the smart card holder.

In a particular example, the head 2223 of the terminal cantilever 222 is provided with two supporting portions oppositely projecting towards two sides.

With reference to Fig. 2C, the head 2223 of the terminal cantilever 222 is provided with supporting portions 2223a and 2223b oppositely projecting towards two sides. The supporting portion 2223a is contiguously placed on the bent portion 2212a while the supporting portion 2223b is contiguously placed on the bending portion 2212b before the smart card is inserted into the smart card holder. When inserting the smart card into the smart card holder, the supporting portions 2223a and 2223b slide downwards along the bending portions 2212a and 2212b respectively.

In a particular example, the holder body 21 is provided with a metal plate below the head 2223 of the terminal cantilever 222.

With reference to Fig. 2C again, the holder body 21 is provided with a metal plate 211 below the head 2223 of the terminal cantilever 222. The metal plate 211 is mainly used to prevent damage to a circuit board or the like caused by the sliding of the head 2223 of the terminal cantilever 222 on the circuit board below, and to prevent the effect of the cutting dust produced by the action of sliding of the terminal cantilever 222.

In a particular example, the supporting portions are contiguously located on the bent portions respectively when no smart card is inserted into the smart card holder.

The supporting portions are disengaged from the bent portions and slide forwards to contact the metal plate when the smart card is inserted into the smart card holder.

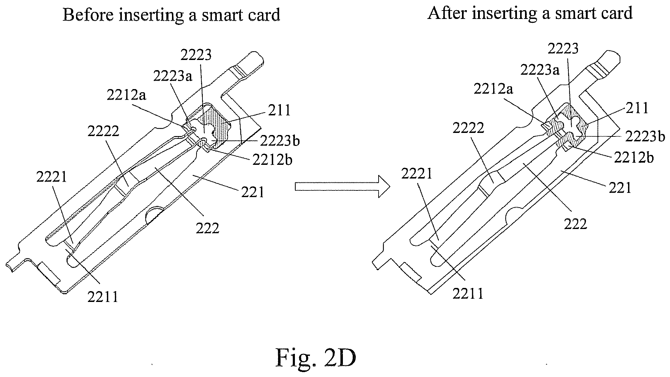

With reference to Fig. 2D, it is a structural schematic diagram of a holder terminal before and after a smart card is inserted into a smart card holder according to an exemplary embodiment. As seen in Fig. 2D, when no smart card is inserted into the smart card holder, the supporting portion 2223a of the head 2223 of the terminal cantilever 222 is contiguously placed on the bent portion 2212a of the terminal fixing portion 221 while the supporting portion 2223b of the head 2223 of the terminal cantilever 222 is contiguously placed on the bent portion 2212b of the terminal fixing portion 221. At that point, the head 2223 of the terminal cantilever 222 may be or may not be in contact with the metal plate 211 below. When inserting the smart card into the smart card holder, the middle portion 2222 of the terminal cantilever 222 is in contact with metal chip of the smart card and moves downwards under the pressure of the smart card; the connection between the tail 2221 of the terminal cantilever 222 and the first fixing end 2211 of the terminal fixing portion 221 is deformed due to the pressure suffered; and the supporting portions 2223a and 2223b of the head 2223 of the terminal cantilever 222 slide along respective bent portions 2212a and 2212b of the terminal fixing portion 221 due to the applied pressure, disengage and gradually move away from the bent portions 2212a and 2212b. The head 2223 of the terminal cantilever will abut against the metal plate 211 once the smart card is completely inserted into the smart card holder.

It should be noted that when inserting the smart card into the smart card holder, the pressure of the smart card is directly applied to the middle portion 2222 of the terminal cantilever 222, of which the pressure received is dispersed to the tail 2221 of the terminal cantilever 222 and the head 2223 of the terminal cantilever 222, such that both the tail 2221 and the head 2223 of the terminal cantilever 222 sustain the pressure from the smart card to increase the maximum pressure value sustained by the entire terminal cantilever 222. As such, the phenomenon that the terminal boom 222 fails to rebound could hardly happen again.

In a particular example, an area of the metal plate 211 is larger than a sliding area of the head 2223 of the terminal cantilever 222 when sliding.

The metal plate 211 may be arranged to prevent damages to the circuit board caused by the head 2223 of the terminal cantilever 222 when sliding on the circuit board below, therefore the area of the metal plate 211 should be larger than the sliding area of the head 2223 of the terminal cantilever 222 when sliding.

In conclusion, the smart card holder according to a particular embodiment, the head of the terminal cantilever is in contact with the second fixing end of the terminal fixing portion by fixedly connecting the tail of the terminal cantilever to the first fixing end of the terminal fixing portion; as the head of the terminal cantilever is stable on the terminal fixing portion, the present disclosure solves a problem that: the head of the terminal cantilever in the free state fails to rebound because of excessive pressure after extracting the smart card, such that the circuits between the smart card holder and the smart card are not conducted when re-inserting the smart card; thus improves the connection stability between the smart card holder and the smart card.

In addition, the holder body is provided with the metal plate below the head of the terminal cantilever; as the head of the terminal cantilever slides on the metal plate when inserting the smart card into the smart card holder, the present disclosure solves the problem of damages to the circuit boards caused by the head of the terminal cantilever directly sliding on the circuit boards; the present disclosure improves the service life of the smart card holder.

Other embodiments of the invention will be apparent to those skilled in the art from consideration of the specification and practice of the invention disclosed here. This application is intended to cover any variations, uses, or adaptations of the invention following the general principles thereof and including such departures from the present disclosure as come within known or customary practice in the art. It is intended that the specification and examples be considered as exemplary only, with a true scope of the invention being indicated by the following claims.

## Claims

1. A smart card holder comprising: a holder body (21) and at least one holder terminal (22) for being in electrical contact with a metal chip of a smart card;
each holder terminal (22) including a terminal fixing portion (221) and a strip-shaped terminal cantilever (222), a tail (2221) of the terminal cantilever (222) being fixedly connected to a first fixing end (2211) of the terminal fixing portion (221), a head (2223) of the terminal cantilever (222) being contiguously placed on a second fixing end (2212) of the terminal fixing portion (221), and a middle portion (2222) of the terminal cantilever (222) being higher than the tail (2221) of the terminal cantilever (222) and the head (2223) of the terminal cantilever (222),
said smart card holder being **characterized in that** the terminal fixing portion (221) is a framed metal structure with a middle cutout, the second fixing end (2212) being provided with two bent portions (2212a, 2212b) projecting towards the cutout with each other;
wherein each bent portion (2212a, 2212b) gradually declines from the tail (2221) to the head (2223) of the terminal cantilever (222).

2. The smart card holder according to claim 1, **characterized in that** the terminal cantilever (222) is located above the cutout of the terminal fixing portion (221).

3. The smart card holder according to claim 1 or 2, **characterized in that**, the head (2223) of the terminal cantilever (222) is provided with two supporting portions (2223a, 2223b) oppositely projecting towards two sides.

4. The smart card holder according to claim 3, **characterized in that**, the holder body (21) is provided with a metal plate (211) below the head (2223) of the terminal cantilever (222).

5. The smart card holder according to claim 4, **characterized in that**,
the supporting portions (2223a, 2223b) are contiguously located on the bent portions (2212a, 2212b) respectively, when no smart card is inserted into the smart card holder;
the supporting portions (2223a, 2223b) are disengaged from the bent portions (2212a, 2212b) and are arranged to slide forwards to contact the metal plate (211) when the smart card is inserted into the smart card holder.

6. The smart card holder according to claim 5, **characterized in that**, an area of the metal plate (211) is larger than a sliding area of the head (2223) of the terminal cantilever (222) when sliding.

7. An electronic device, **characterized in that**, the electronic device comprises a smart card holder according to any one of claims 1 to 6.

## Patentansprüche

1. Chipkartenhalter umfassend: einen Halterkörper (21) und mindestens einen Halteranschluss (22), um mit einem Metallchip einer Chipkarte in elektrischem Kontakt zu stehen,
wobei jeder Halteranschluss (22) einen Anschlussfixierungsabschnitt (221) und einen streifenförmigen Anschlusskragarm (222) beinhaltet, wobei ein Ende (2221) des Anschlusskragarms (222) fest mit einem ersten Fixierungsende (2211) des Anschlussfixierungsabschnitts (221) verbunden ist, ein Kopf (2223) des Anschlusskragarms (222) benachbart auf einem zweiten Fixierungsende (2212) des Anschlussfixierungsabschnitts (221) platziert ist, und ein mittlerer Abschnitt (2222) des Anschlusskragarms (222) höher als das Ende (2221) des Anschlusskragarms (222) und der Kopf (2223) des Anschlusskragarms (222) ist,
wobei der Chipkartenhalter **dadurch gekennzeichnet ist, dass** der Anschlussfixierungsabschnitt (221) eine gerahmte Metallstruktur mit einer mittleren Aussparung ist, wobei das zweite Fixierungsende (2212) mit zwei gebogenen Abschnitten (2212a, 2212b) versehen ist, die zu der Aussparung hin miteinander vorstehen,
wobei jeder gebogene Abschnitt (2212a, 2212b) schrittweise von dem Ende (2221) zu dem Kopf (2223) des Anschlusskragarms (222) abfällt.

2. Chipkartenhalter nach Anspruch 1, **dadurch gekennzeichnet, dass** der Anschlusskragarm (222) oberhalb der Aussparung des Anschlussfixierungsabschnitts (221) liegt.

3. Chipkartenhalter nach Anspruch 1 oder 2, **dadurch gekennzeichnet, dass** der Kopf (2223) des Anschlusskragarms (222) mit zwei Stützabschnitten (2223a, 2223b) versehen ist, die entgegengesetzt zu zwei Seiten hin vorstehen.

4. Chipkartenhalter nach Anspruch 3, **dadurch gekennzeichnet, dass** der Halterkörper (21) mit einer Metallplatte (211) unterhalb des Kopfes (2223) des Anschlusskragarms (222) versehen ist.

5. Chipkartenhalter nach Anspruch 4, **dadurch gekennzeichnet, dass**
die Stützabschnitte (2223a, 2223b) jeweils benachbart auf den gebogenen Abschnitten (2212a, 2212b) liegen, wenn keine Chipkarte in den Chipkartenhalter eingeführt ist,
die Stützabschnitte (2223a, 2223b) von den gebogenen Abschnitten (2212a, 2212b) gelöst und angeordnet sind, um nach vorne zu gleiten, um die Metallplatte (211) zu berühren, wenn die Chipkarte in den Chipkartenhalter eingeführt wird.

6. Chipkartenhalter nach Anspruch 5, **dadurch gekennzeichnet, dass** ein Bereich der Metallplatte (211) größer als ein Schiebebereich des Kopfes (2223) des Anschlusskragarms (222) beim Schieben ist.

7. Elektronische Vorrichtung, **dadurch gekennzeichnet, dass** die elektronische Vorrichtung einen Chipkartenhalter nach einem der Ansprüche 1 bis 6 umfasst.

## Revendications

1. Support de carte à puce comprenant : un corps de support (21) et au moins une borne de support (22) pour être en contact électrique avec une puce métallique d'une carte à puce ;
chaque borne de support (22) comprenant une partie de fixation de borne (221) et un porte-à-faux de borne en forme de bande (222), une queue (2221) du porte-à-faux de borne (222) étant raccordée, de manière fixe, à une première extrémité de fixation (2211) de la partie de fixation de borne (221), une tête (2223) du porte-à-faux de borne (222) étant placée, de manière contiguë, sur une seconde extrémité de fixation (2212) de la partie de fixation de borne (221), et une partie centrale (2222) du porte-à-faux de borne (222) étant plus haute que la queue (2221) du porte-à-faux de borne (222) et la tête (2223) du porte-à-faux de borne (222),
ledit support de carte à puce étant **caractérisé en ce que** la partie de fixation de borne (221) est une structure métallique à cadre avec une découpe centrale, la seconde extrémité de fixation (2212) étant prévue avec deux parties pliées (2212a, 2212b) faisant saillie vers la découpe l'une par rapport à l'autre ;
dans lequel chaque partie pliée (2212a, 2212b) diminue progressivement de la queue (2221) à la tête (2223) du porte-à-faux de borne (222).

2. Support de carte à puce selon la revendication 1, **caractérisé en ce que** le porte-à-faux de borne (222) est positionné au-dessus de la découpe de la partie de fixation de borne (221).

3. Support de carte à puce selon la revendication 1 ou 2, **caractérisé en ce que** la tête (2223) du porte-à-faux de borne (222) est prévue avec deux parties de support (2223a, 2223b) en saillie à l'opposé vers deux côtés.

4. Support de carte à puce selon la revendication 3, **caractérisé en ce que** le corps de support (21) est prévu avec une plaque métallique (211) au-dessous de la tête (2223) du porte-à-faux de borne (222).

5. Support de carte à puce selon la revendication 4, **caractérisé en ce que** :
les parties de support (2223a, 2223b) sont positionnées, de manière contiguë sur les parties pliées (2212a, 2212b) respectivement, lorsqu'aucune carte à puce n'est insérée dans le support de carte à puce ;
les parties de support (2223a, 2223b) sont dégagées des parties pliées (2212a, 2212b) et sont agencées pour coulisser vers l'avant pour être en contact avec la plaque métallique (211) lorsque la carte à puce est insérée dans le support de carte à puce.

6. Support de carte à puce selon la revendication 5, **caractérisé en ce qu'**une zone de la plaque métallique (211) est plus grande qu'une zone de coulissement de la tête (2223) du porte-à-faux de borne (222) lors du coulissement.

7. Dispositif électronique **caractérisé en ce que** le dispositif électronique comprend un support de carte à puce selon l'une quelconque des revendications 1 à 6.
